# EUROPÄISCHE PATENTSCHRIFT

(11) **EP 1 654 046 B1**
(45) Veröffentlichungstag und Bekanntmachung des Hinweises auf die Patenterteilung: **23.09.2009**
(21) Anmeldenummer: 04763246.8
(22) Anmeldetag: 15.07.2004
(51) Int. Cl.: B01D 3/36

(54) **DESTILLATIVES VERFAHREN ZUR TRENNUNG VON ENGSIEDENDEN ODER AZEOTROPEN GEMISCHEN UNTER VERWENDUNG VON IONISCHEN FLÜSSIGKEITEN**
DISTILLATIVE METHOD FOR SEPARATING NARROW BOILING OR AZEOTROPIC MIXTURES USING IONIC LIQUIDS
PROCEDE DE DISTILLATION POUR SEPARER DES MELANGES AZEOTROPES OU A EBULLITION ETROITE EN UTILISANT DES LIQUIDES IONIQUES

(30) Priorität: 05.08.2003 DE 10336556
(43) Veröffentlichungstag der Anmeldung: 10.05.2006
(73) Patentinhaber: BASF SE, 67056 Ludwigshafen (DE)
(72) Erfinder: BESTE, York, Alexander, 67346 Speyer (DE); SCHOENMAKERS, Hartmut, 69221 Dossenheim (DE)
(74) Vertreter: Reitstötter - Kinzebach
(86) Internationale Anmeldenummer: PCT/EP2004/007869
(87) Internationale Veröffentlichungsnummer: WO 2005/016483

(56) Entgegenhaltungen:
- EP-A- 0 384 458
- EP-A- 0 602 302
- EP-A- 1 462 433
- WO-A-02/074718

## Beschreibung

Die vorliegende Erfindung betrifft ein verbessertes Verfahren zur Auftrennung azeotroper oder engsiedender Gemische durch eine Extraktiv-Rektifikation

In der Industrie treten eine Vielzahl von Flüssigmischungen auf, die sich nicht durch konventionelle Rektifikation, sondern vorzugsweise durch Extraktiv-Rektifikation [Stichlmair, S. und Fair, J., Distillation, ISBN 0-471-25241-7, Seite 241 ff] trennen lassen. Dieser Sachverhalt ist in dem ähnlichen Siedeverhalten der Gemischkomponenten begründet, das heißt in ihrer Eigenschaft, sich bei einem definiertem Druck und einer definierten Temperatur im nahezu gleichen oder gleichen molaren Konzentrationsverhältnis auf die Dampf- und Flüssigphase zu verteilen.

Der Trennaufwand für eine binäre - aus den Komponenten i und j bestehende - Flüssigmischung bei der Rektifikation spiegelt sich im sogenannten Trennfaktor αᵢⱼ, dem Verhältnis der Verteilungskoeffizienten der Komponenten i und j, wider. Je näher der Trennfaktor dem Wert eins kommt, desto aufwendiger wird die Trennung der Gemischkomponenten mittels konventioneller Rektifikation, da entweder die Trennstufenanzahl der Rektifikationskolonne und/oder das Rücklaufverhältnis im Kolonnenkopf vergrößert werden muss. Nimmt der Trennfaktor den Wert eins an, so liegt ein azeotroper Punkt vor, und die weitere Aufkonzentrierung der Gemischkomponenten ist auch durch eine Erhöhung der Trennstufenzahl oder des Rücklaufverhältnisses nicht mehr möglich. Generell ist bei der Verwendung des Trennfaktors zu beachten, dass er größer oder kleiner 1 sein kann, je nachdem ob der Verteilungskoeffizient des Leichtsieders im Zähler oder im Nenner steht. Normalerweise wird der Leichtsieder im Zähler aufgetragen, so dass der Trennfaktor größer 1 ist.

Ein in der Industrie häufig praktiziertes Vorgehen zur Trennung engsiedender - hierbei wird ein Trennfaktor etwa kleiner 1,2 verstanden - oder azeotroper Systeme stellt die Zugabe eines selektiven Zusatzstoffes, des sogenannten Entrainers, in einer Extraktiv-Rektifikation dar. Ein geeigneter Zusatzstoff beeinflusst durch selektive Wechselwirkungen mit einer oder mehreren der Gemischkomponenten den Trennfaktor, so dass die Auftrennung der engsiedenden oder azeotrop-siedenden Gemischkomponenten ermöglicht wird. Bei der Extraktiv-Rektifikation sind die durch die Wirkung des Entrainers erhaltenen Kopf- und Sumpfkomponenten die Zielkomponenten der Kolonne. Die Kopfkomponente ist die in Anwesenheit des Entrainers leichter siedende Komponente und im Sumpf befindet sich die in Anwesenheit des Entrainers schwerer siedenden Komponenten.

Ein Gütemaß für die Intensität der Wechselwirkungen des Entrainers mit einer oder mehreren der Gemischkomponenten stellt die sogenannte Selektivität dar. Die Selektivität ist definiert als das Verhältnis aus Grenzaktivitätskoeffizient der Komponente i zu Grenzaktivitätskoeffizient der Komponente j, wobei die Komponenten i und j im Entrainer unendlich verdünnt vorliegen [Schult, C. J. et. al.; Infinite-dilution activity coefficients for several solutes in hexadecane and in n-methyl-2-pyrrolidone (NMP): experimental measurements and UNIFAC predictions; Fluid Phase Equilibria 179 (2001) S.117-129]. Wie von Schult et. al. dargelegt, führt eine höhere Entrainer-Selektivität zu einer höheren relativen Flüchtigkeit, einem kleineren Rücklaufverhältnis und somit zu niedrigeren Trennkosten. Wie weiter hinten offenbart ist eine möglichst hohe Selektivität z. B. größer 1,3, bevorzugt größer 2,0. angestrebt.

In der Patentschrift WO 02/074718 wurde offenbart, dass Ionische Flüssigkeiten besonders gute Entrainer zur Trennung engsiedender oder azeotroper Flüssigmischungen sind und herkömmlichen Entrainer überlegen sind. Die Überlegenheit kann direkt an Selektivität und Trennfaktor abgelesen werden. Bei Verwendung einer geeigneten ionischen Flüssigkeit ist der Trennfaktor am azeotropen Punkt stärker verschieden von eins als bei Verwendung eines konventionellen Zusatzstoffes in gleichen Mengen.

Unter ionischen Flüssigkeiten werden solche verstanden, wie sie von Wasserscheid und Keim in der Angewandten Chemie 2000, 112, 3926-3945 definiert sind. Die Stoffgruppe der ionischen Flüssigkeiten stellt ein neuartiges Lösungsmittel dar. Wie in der genannten Druckschrift aufgeführt handelt es sich bei ionischen Flüssigkeiten um bei relativ niedrigen Temperaturen schmelzende Salze mit nichtmolekularem, ionischen Charakter. Sie sind bereits bei relativ niedrigen Temperaturen kleiner 200°C, bevorzugt kleiner 150°C, besonders bevorzugt kleiner 100°C flüssig und dabei relativ niedrigviskos. Sie besitzen sehr gute Löslichkeiten für eine große Anzahl organischer, anorganischer und polymerer Substanzen.

Ionische Flüssigkeiten sind im Vergleich zu ionischen Salzen bei wesentlich geringeren Temperaturen (in der Regel unterhalb von 200°C,) flüssig und besitzen häufig einen Schmelzpunkt unterhalb von 0°C, im Einzelfall bis -96°C, was wichtig für die industrielle Umsetzung der Extraktiv-Rektifikation ist.

Darüber hinaus sind ionische Flüssigkeiten in der Regel nicht brennbar, nicht korrosiv und wenig viskos und zeichnen sich durch einen nicht messbaren Dampfdruck aus.

Als ionische Flüssigkeiten werden erfindungsgemäß solche Verbindungen bezeichnet, die mindestens eine positive und mindestens eine negative Ladung aufweisen, insgesamt jedoch ladungsneutral sind, und einen Schmelzpunkt unter 200°C aufweisen, bevorzugt unter 100, besonders bevorzugt unter 50°C.

Die Ionischen Flüssigkeiten können auch mehrere positive oder negative Ladungen aufweisen, beispielsweise 1 bis 5, bevorzugt 1 bis 4, besonders bevorzugt 1 bis 3, ganz besonders bevorzugt 1 bis 2, insbesondere jedoch je eine positive und negative Ladung.

Die Ladungen können sich an verschiedenen lokalisierten oder delokalisierten Bereichen innerhalb eines Moleküls befinden, also betainartig, oder auf je ein getrenntes Anion und Kation verteilt sein. Bevorzugt sind solche Ionischen Flüssigkeiten, die aus mindestens einem Kation und mindestens einem Anion aufgebaut sind. Kation und Anion können, wie oben ausgeführt, ein oder mehrfach, bevorzugt einfach geladen sein.

Selbstverständlich sind auch Gemische verschiedener ionischer Flüssigkeiten oder Mischungen aus herkömmlichen Entrainern, wie n-Methylpyrrolidon, Dimethylformamid, Ethandiol, Benzol, Cyclohexan, Wasser usw., mit Ionischen Flüssigkeiten denkbar.

Bevorzugt als Kation sind Ammonium- oder Phosphoniumionen, oder solche Kationen, die mindestens einen fünf- bis sechsgliedrigen Heterocyclus enthalten, der mindestens ein Phosphor- oder Stickstoffatom sowie gegebenenfalls ein Sauerstoff- oder Schwefelatom aufweist, besonders bevorzugt solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit ein oder zwei Stickstoffatomen.

Besonders bevorzugte Ionische Flüssigkeiten sind solche, die ein Molgewicht unter 1000 g/mol aufweisen, ganz besonders bevorzugt unter 350 g/mol.

Weiterhin sind solche Kationen bevorzugt, die ausgewählt sind aus den Verbindungen der Formeln (Ia) bis (Iw), 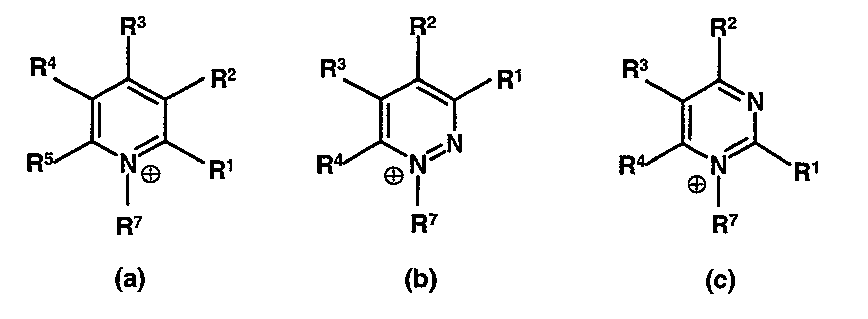 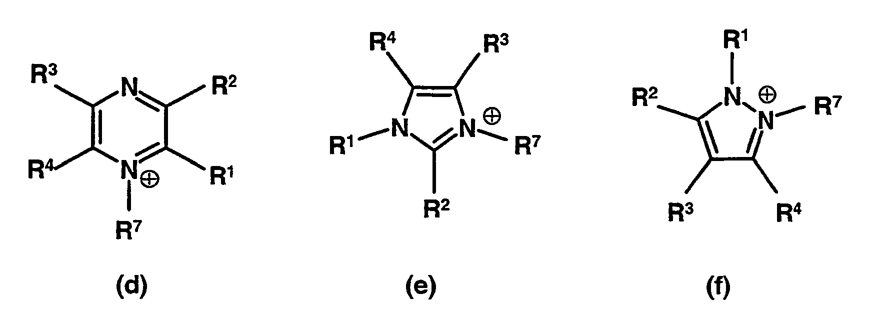 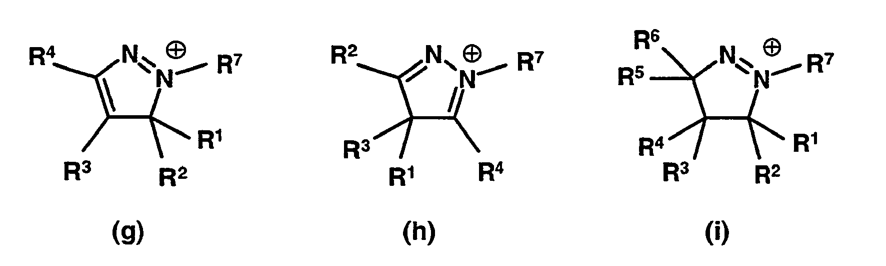 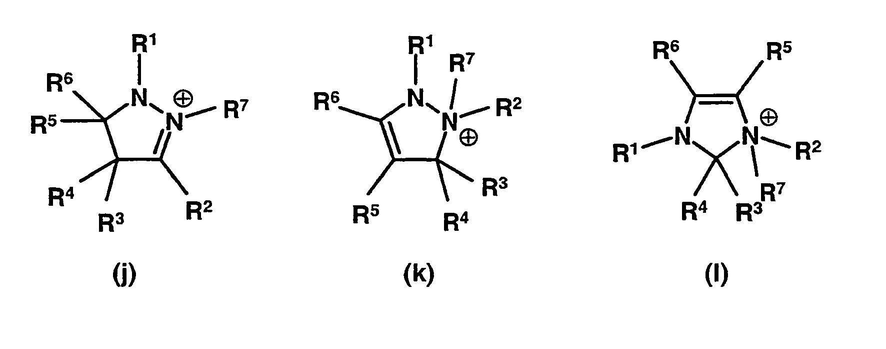 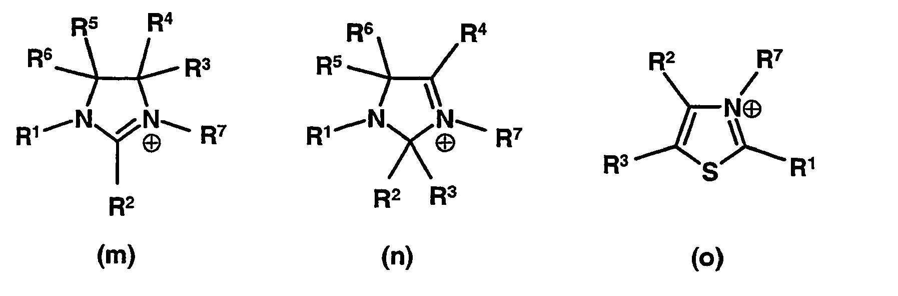 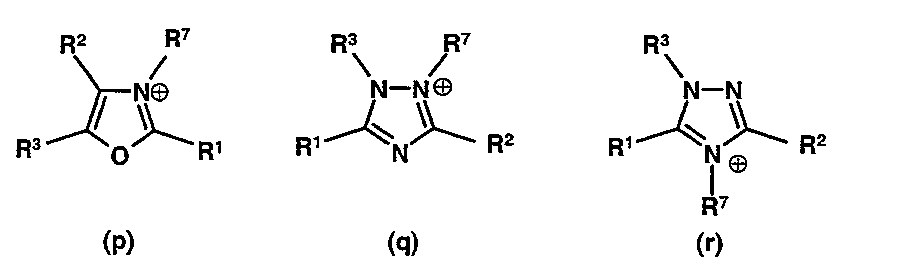 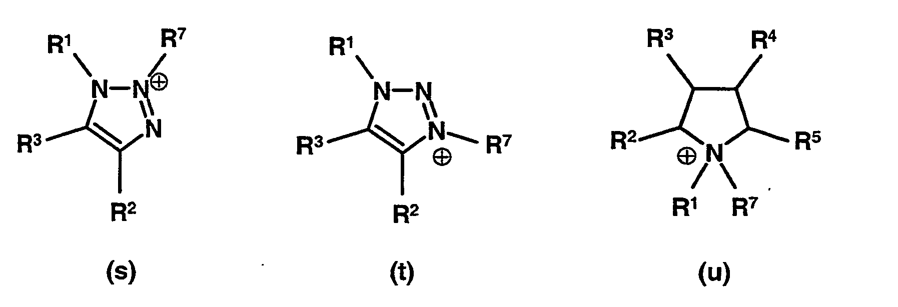 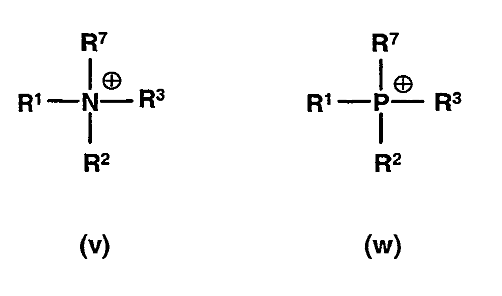 sowie Oligo- bzw. Polymere, die diese Strukturen enthalten,
worin
R¹, R², R³, R⁴, R⁵, R⁶ und R⁷ unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder zwei von ihnen gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.
R¹, R², R³, R⁴, R⁵ und R⁶ können zusätzlich dazu Wasserstoff bedeuten.
R⁷ kann darüberhinaus C₁-C₁₈-Alkyloyl (Alkylcarbonyl), C₁ - C₁₈- Alkyloxycarbonyl, C₅ - C₁₂-Cycloalkylcarbonyl oder C₆ - C₁₂-Aryloyl (Arylcarbonyl) bedeuten, wobei die genannten Reste jeweils durch funktionelle Gruppen, Aryl, Alkyl, Aryloxy, Alkyloxy, Halogen, Heteroatome und/oder Heterocyclen substituiert sein können.

Darin bedeuten
gegebenenfalls durch funktionelle Gruppen, Aryl, Alkyl, Aryloxy, Alkyloxy, Halogen, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl und,
gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxaundecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bilden zwei Reste einen Ring, so können diese Reste gemeinsam bedeuten 1,3-ropylen, 1,4-Butylen, 2-Oxa-1,3-propylen, 1-Oxa-1,3-propylen, 2-Oxa-1,3-propylen, 1-Oxa-1,3-propenylen, 1-Aza-1,3-propenylen, 1-C₁-C₄-Alkyl-1-aza-1,3-propenylen, 1,4-uta-1,3-dienylen, 1-Aza-1,4-buta-1,3-dienylen oder 2-Aza-1,4-buta-1,3-dienylen.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, iso-Propylimino, n-Butylimino oder tert-Butylimino sein.

Weiterhin bedeuten
funktionelle Gruppen Carboxy, Carboxamid, Hydroxy, Di-(C₁-C₄-Alkyl)-amino, C₁-C₄-Alkyloxycarbonyl, Cyano oder C₁-C₄-Alkyloxy,
gegebenenfalls durch funktionelle Gruppen, Aryl, Alkyl, Aryloxy, Alkyloxy, Halogen, Heteroatome und/oder Heterocyclen substituiertes C₆-C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Diethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxyethylphenyl,
gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl und
C₁ bis C₄-Alkyl beispielsweise Methyl, Ethyl, Propyl, Isopropyl, n-Butyl, sec-Butyl oder tert.-Butyl.

C₁-C₁₈-Alkyloyl (Alkylcarbonyl) kann beispielsweise sein Acetyl, Propionyl, n-Butyloyl, sec-Butyloyl, tert.-Butyloyl, 2-Etylhexylcarbonyl, Decanoyl, Dodecanoyl, Chloracetyl, Trichloracetyl oder Trifluoracetyl.

C₁ - C₁₈- Alkyloxycarbonyl kann beispielsweise sein Methyloxycarbonyl, Ethyloxycarbonyl, Propyloxycarbonyl, Isopropyloxycarbonyl, n-Butyloxycarbonyl, sec-Butyloxycarbonyl, tert.-Butyloxycarbonyl, Hexyloxycarbonyl, 2-Etylhexyloxycarbonyl oder Benzyloxycarbonyl.

C₅-C₁₂-Cycloalkylcarbonyl kann beispielsweise sein Cyclopentylcarbonyl, Cyclohexylcarbonyl oder Cyclododecylcarbonyl.

C₆-C₁₂-Aryloyl (Arylcarbonyl) kann beispielsweise sein Benzoyl, Toluyl, Xyloyl, α-Naphthoyl, β-Naphthoyl, Chlorbenzoyl, Dichlorbenzoyl, Trichlorbenzoyl oder Trimethylbenzoyl.

Bevorzugt sind R¹, R², R³, R⁴, R⁵ und R⁶ unabhängig voneinander Wasserstoff, Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Dimethylamino, Diethylamino und Chlor. Bevorzugt ist R⁷ Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Acetyl, Propionyl, t-Butyryl, Methoxycarbonyl, Ethoxycarbonyl oder n-Butoxycarbonyl.

Besonders bevorzugte Pyridiniumionen (la) sind solche, bei denen einer der Reste R¹ bis R⁵ Methyl, Ethyl oder Chlor ist, R⁷ Acetyl, Methyl, Ethyl oder n-Butyl und alle anderen Wasserstoff sind, oder R³ Dimethylamino, R⁷ Acetyl, Methyl, Ethyl oder n-Butyl und alle anderen Wasserstoff sind oder R⁷ Acetyl, Methyl, Ethyl oder n-Butyl und alle anderen Wasserstoff sind oder R² Carboxy oder Carboxamid, R⁷ Acetyl, Methyl, Ethyl oder n-Butyl und alle anderen Wasserstoff oder R¹ und R² oder R² und R³ 1 ,4-Buta-1,3-dienylen, R⁷ Acetyl, Methyl, Ethyl oder n-Butyl und alle anderen Wasserstoff sind.

Besonders bevorzugte Pyridaziniumionen (Ib) sind solche, bei denen einer der Reste R¹ bis R⁴ Methyl oder Ethyl, R⁷ Acetyl, Methyl, Ethyl oder n-Butyl und alle anderen Wasserstoff oder R⁷ Acetyl, Methyl, Ethyl oder n-Butyl, und alle anderen Wasserstoff sind.

Besonders bevorzugte Pyrimidiniumionen (Ic) sind solche, bei denen R² bis R⁴ Wasserstoff oder Methyl, R⁷ Acetyl, Methyl, Ethyl oder n-Butyl und R¹ Wasserstoff, Methyl oder Ethyl ist, oder R² und R⁴ Methyl, R³ Wasserstoff und R¹ Wasserstoff, Methyl oder Ethyl und R⁷ Acetyl, Methyl, Ethyl oder n-Butyl ist.

Besonders bevorzugte Pyraziniumionen (Id) sind solche, bei denen
R¹ bis R⁴ alle Methyl und
R⁷ Acetyl, Methyl, Ethyl oder n-Butyl oder R⁷ Acetyl, Methyl, Ethyl oder n-Butyl und alle anderen Wasserstoff sind.

Besonders bevorzugte Imidazoliumionen (Ie) sind solche, bei denen unabhängig voneinander
R¹ ausgewählt ist unter Methyl, Ethyl, n-Propyl, n-Butyl, n-Pentyl, n-Octyl, n-Decyl, n-Dodecyl, 2-Hydroxyethyl oder 2-Cyanoethyl,
R⁷ Acetyl, Methyl, Ethyl oder n-Butyl und
R² bis R⁴ unabhängig voneinander Wasserstoff, Methyl oder Ethyl bedeuten.

Besonders bevorzugte 1 H-Pyrazoliumionen (If) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 3H-Pyrazoliumionen (Ig) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 4H-Pyrazoliumionen (Ih) sind solche, bei denen unabhängig voneinander
R¹ bis R⁴ unter Wasserstoff oder Methyl und
R⁷ unter Acetyl, Methyl, Ethyl oder n-Butyl ausgewählt sind.

Besonders bevorzugte 1-Pyrazoliniumionen (Ii) sind solche, bei denen unabhängig voneinander
R¹ bis R⁶ unter Wasserstoff oder Methyl und
R⁷ unter Acetyl, Methyl, Ethyl oder n-Butyl ausgewählt sind.

Besonders bevorzugte 2-Pyrazoliniumionen (Ij) sind solche, bei denen unabhängig voneinander
R¹ unter Wasserstoff, Methyl, Ethyl oder Phenyl,
R⁷ unter Acetyl, Methyl, Ethyl oder n-Butyl und
R² bis R⁶ unter Wasserstoff oder Methyl ausgewählt sind.

Besonders bevorzugte 3-Pyrazoliniumionen (Ik) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ bis R⁶ unter Wasserstoff oder Methyl ausgewählt sind.

Besonders bevorzugte Imidazoliniumionen (II) sind solche, bei denen unabhängig voneinander
R¹ oder R² unter Wasserstoff, Methyl, Ethyl, n-Butyl oder Phenyl,
R⁷ unter Acetyl, Methyl, Ethyl oder n-Butyl und
R³ oder R⁴ unter Wasserstoff, Methyl oder Ethyl und
R⁵ oder R⁶ unter Wasserstoff oder Methyl ausgewählt sind.

Besonders bevorzugte Imidazoliniumionen (Im) sind solche, bei denen unabhängig voneinander
R¹ oder R² unter Wasserstoff, Methyl oder Ethyl,
R⁷ unter Acetyl, Methyl, Ethyl oder n-Butyl und
R³ bis R⁶ unter Wasserstoff oder Methyl ausgewählt sind.

Besonders bevorzugte Imidazoliniumionen (In) sind solche, bei denen unabhängig voneinander
R¹, R² oder R³ unter Wasserstoff, Methyl oder Ethyl,
R⁷ Acetyl, Methyl, Ethyl oder n-Butyl und
R⁴ bis R⁶ unter Wasserstoff oder Methyl ausgewählt sind.

Besonders bevorzugte Thiazoliumionen (Io) oder Oxazoliumionen (Ip) sind solche, bei denen unabhängig voneinander
R¹ unter Wasserstoff, Methyl, Ethyl oder Phenyl,
R⁷ unter Acetyl, Methyl, Ethyl oder n-Butyl und
R² oder R³ unter Wasserstoff oder Methyl ausgewählt sind.

Besonders bevorzugte 1,2,4-Triazoliumionen (Iq) und (Ir) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ unter Wasserstoff, Methyl oder Phenyl ausgewählt sind.

Besonders bevorzugte 1,2,3-Triazoliumionen (Is) und (It) sind solche, bei denen unabhängig voneinander
R¹ unter Wasserstoff, Methyl oder Ethyl,
R⁷ unter Acetyl, Methyl, Ethyl oder n-Butyl und
R² oder R³ unter Wasserstoff oder Methyl ausgewählt sind oder
R² und R³ 1,4-Buta-1,3-dienylen und alle anderen Wasserstoff sind.

Besonders bevorzugte Pyrrolidiniumionen (Iu) sind solche, bei denen unabhängig voneinander
R¹ und R⁷ unter Acetyl, Methyl, Ethyl oder n-Butyl ausgewählt sind und
R², R³, R⁴ und R⁵ Wasserstoff bedeuten.

Besonders bevorzugte Ammoniumionen (Iv) sind solche, bei denen unabhängig voneinander
R⁷ unter Acetyl, Methyl, Ethyl oder n-Butyl und
R¹, R², und R³ unter Methyl, Ethyl, n-Butyl, 2-Hydroxyethyl, Benzyl oder Phenyl ausgewählt sind.

Besonders bevorzugte Phosphoniumionen (Iw) sind solche, bei denen unabhängig voneinander
R⁷ unter Acetyl, Methyl, Ethyl oder n-Butyl und
R¹, R², und R³ unter Phenyl, Phenoxy, Ethoxy und n-Butoxy ausgewählt sind.

Unter diesen sind die Ammonium-, Phosphonium-, Pyridinium- und Imidazoliumionen bevorzugt.

Ganz besonders bevorzugt sind als Kationen 1,2-Dimethylpyridinium, 1-Methyl-2-ethylpyridinium, 1-Methyl-2-ethyl-6-methylpyridinium, N-Methylpyridinium, 1-Butyl-2-methylpyridinium, 1-Butyl-2-ethylpyridinium, 1-Butyl-2-ethyl-6-methylpyridinium, N-Butylpyridinium, 1-Butyl-4-methylpyridinium, 1,3-Dimethylimidazolium, 1,2,3-Trimethylimidazolium, 1-n-Butyl-3-methylimidazolium, 1,3,4,5-Tetramethylimidazolium, 1,3,4-Trimethylimidazolium, 2,3-Dimethylimidazolium, 1-Butyl-2,3-dimethylimidazolium, 3,4-Dimethylimidazolium, 2-Ethyl-3,4-dimethylimidazolium, 3-Methyl-2-ethylimidazol, 3-Butyl-1-methylimidazolium, 3-Butyl-1-ethylimidazolium, 3-Butyl-1,2-dimethylimidazolium, 1,3-Di-n-Butylimidazolium, 3-Butyl-1,4,5-Trimethylimidazolium, 3-Butyl-1,4-Dimethylimidazolium, 3-Butyl-2-methylimidazolium, 1,3-Dibutyl-2-methylimidazolium, 3-Butyl-4-methylimidazolium, 3-Butyl-2-ethyl-4-methylimidazolium und 3-Butyl-2-ethylimidazolium, 1-Methyl-3-Octylimidazolium, 1-Decyl-3-Methylimidazolium.

Insbesondere bevorzugt sind 1-Butyl-4-methylpyridinium, 1-n-Butyl-3-methylimidazolium und 1-n-Butyl-3-ethylimidazolium.

Als Anionen sind prinzipiell alle Anionen denkbar.

Bevorzugt als Anionen sind Halogenide, F, Cl⁻, Br⁻, I⁻, Acetat CH₃COO⁻, Trifluoracetat CF₃COO⁻, Triflat CF₃SO3⁻, Sulfat SO₄²⁻, Hydrogensulfat HSO₄⁻, Methylsulfat CH₃OSO₃⁻, Ethylsulfat C₂H₅OSO₃⁻, Sulfit SO₃²⁻, Hydrogensulfit HSO₃⁻, Aluminiumchloride AlCl₄⁻, Al₂Cl₇⁻, Al₃Cl₁₀⁻, Aluminiumtribromid AlBr₄⁻, Nitrit NO₂⁻, Nitrat NO₃⁻, Kupferchlorid CuCl₂⁻, Phosphat PO₄³⁻, Hydrogenphosphat HPO₄²⁻, Dihydrogenphosphat H₂PO₄⁻, Carbonat CO₃²⁻, Hydrogencarbonat HCO₃⁻.

Besonders bevorzugt sind Acetate, Sulfonate, Tosylat p-CH₃C₆H₄SO₃⁻, Sulfate, Phosphate, Bis(trifluormethylsulfonyl)imid (CF₃SO₂)₂N⁻.

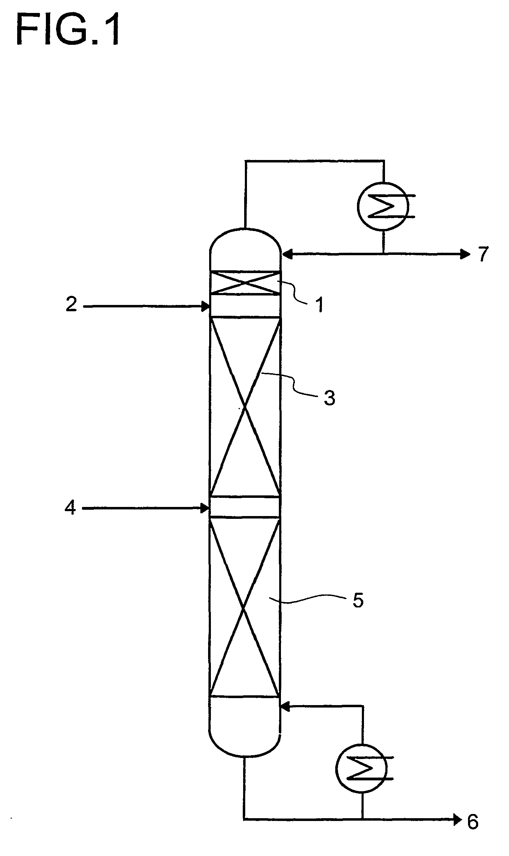

In der Patentanmeldung WO 02/074718 wird eine Ausführungsform der Extraktiv-Rektifikation beschrieben (siehe Figur 1). Mit (2) ist der Zufluss des Entrainers in eine Gegenstrom-Rektifikationskolonne dargestellt. Da in herkömmlichen Verfahren der Entrainer eine geringe, aber bemerkenswerte Flüchtigkeit bezüglich des Kopfproduktes (Strom 7) besitzt, müssen zur Trennung zwischen Kopfprodukt und Entrainer die Trennelemente (1) verwendet werden. Die Trennelemente (3) und (5) bewirken die gewünschte Trennung zwischen Kopf- und Sumpfprodukt unter Wirkung des Entrainers, Strom (4) ist der Zulauf der zu trennenden Komponenten (Feed), Strom(6) ist Sumpfprodukt und der Entrainer. Trennelemente können beispielsweise Böden, geordnete Packungen oder nicht geordnete Füllkörper sein.

Werden Ionische Flüssigkeit als Entrainer verwendet, hat das den Vorteil, dass der Dampfdruck der reinen ionischen Flüssigkeit und damit auch ihr Partialdruck in der Mischung mit dem Kopfprodukt annähernd gleich null sind. Damit können die Trennelemente (1) entfallen. Diese ist nur dann nicht der Fall, wenn flüchtige Verunreinigungen in der Ionischen Flüssigkeit enthalten sind, die z.B. beim Recycling nicht vollständig abgetrennt werden konnten. Um diese vom Kopfprodukt zu trennen ist u.U. doch ein Verstärkungsteil zwischen Zugabestelle der Ionischen Flüssigkeit und dem Kopf der Kolonnen notwendig.

Die bekannten Vorteile von ionischen Flüssigkeiten gegenüber herkömmlichen Entrainern in der Extraktiv-Rektifikation sind im wesentlichen:
- Ionische Flüssigkeiten sind selektiver als herkömmliche Entrainer. Sie ermöglichen durch ihre vergleichsweise große Selektivität, dass im Vergleich zur konventionellen Extraktivrektifikation ein geringerer Massenstrom an Entrainer der Extraktiv-Rektifikation zugeführt und/oder die Trennstufenanzahl in der Extraktiv-Rektifikationskolonne verringert werden kann.
- Durch den äußerst niedrigen Dampfdruck des Entrainers können verschiedene Trennoperationen zur Abtrennung des Entrainers vom Sumpfprodukt verwendet werden, die im Vergleich zur zweiten Rektifikationskolonne bei der konventionellen Extraktivrektifikation einen Vorteil bezüglich Betriebs- und Investkosten ermöglichen.
- Die Trennelemente "1" führen in der konventionellen Extraktiv-Rektifikation zu einer Trennung des Entrainers vom Kopfprodukt, die Trennung ist aber nie vollständig. Ein Austrag von Anteilen an ionischer Flüssigkeit über die Dampfphase ohne die Trennelemente "1" ist aufgrund ihrer äußerst geringen Flüchtigkeit nicht möglich.
- Investitionskosten werden durch Wegfall der Trennelemente (1) reduziert.

Geeignet sind solche ionischen Flüssigkeiten, die in einer Gesamtkonzentration in der Flüssigkeit von 5 bis 90 Mol %, bevorzugt 10 bis 70 Mol %, zu einer Veränderung des Trennfaktors der Zielkomponenten untereinander verschieden von eins führen.

Der Einsatz von Ionischen Flüssigkeiten als Entrainer in der Extraktiv-Rektifikation ist unter anderem für die folgenden Anwendungen besonders geeignet. z.B. Azeotrope: Amine/Wasser, THF/Wasser, Ameisensäure/Wasser, Alkohole/Wasser, Aceton/Methanol, Acetate/Wasser, Acrylate/Wasser, Trimethylborat/Methanol oder engsiedende Gemische: Essigsäure/Wasser, C4-Kohlenwasserstoffe, C3-Kohlenwasserstoffe, Alkane/Alkene, generell Trennung von polaren und unpolaren Stoffen, die Azeotrope bilden oder engsiedend sind.

Die Rückgewinnung der ionischen Flüssigkeit nach der Extraktiv-Destillation ist bisher jedoch nicht befriedigend gelöst. Herkömmliche Entrainer werden üblicherweise vom Sumpfprodukt über eine zweite Destillationskolonne abgetrennt. Da Ionische Flüssigkeiten nicht verdampfbar sind, ist die Anreicherung in einem destillativen Gegenstromprozess nicht von Vorteil und führt zu unnötigen Investitionskosten.

In der WO 02/07418 finden sich allgemeine Hinweise, wie der enthaltene Entrainer zurückgewonnen werden kann (Seite 16). Neben einer Verdampfung wird auch der Einsatz einer Abtriebskolonne oder das Ausfällen in eine feste Phase erwähnt.

In der deutschen Patentanmeldung mit dem Aktenzeichen 10313207.4 werden adsorptive Trennverfahren beschrieben, mit deren Hilfe nicht mehr verdampfbare Schwersieder von ionischer Flüssigkeit abgetrennt werden sollen. Dieser Fall tritt dann ein, wenn die verdampfbaren Komponenten bereits von der ionischen Flüssigkeit abgetrennt worden sind. Es handelt sich dabei meistens um Gemische mit einem sehr hohen Anteil an Ionischer Flüssigkeit und geringen Verunreinigungen, die sich aber aufkonzentrieren würden, wenn sie nicht abgetrennt werden würden. Purgeströme aus IF-haltigen Kreislaufströmen sind dafür z.B. eine Hauptanwendung.

Generell ist man bestrebt, bei der Auftrennung des Gemisches sowohl den Leichtsieder als auch den Schwersieder in möglichst reiner Form in verfahrenstechnisch einfacher Weise zu gewinnen. Weiterhin ist es verfahrenstechnisch und energetisch aufwendig, die wertvolle ionische Flüssigkeit nach der Extraktiv-Rektifikation von noch enthaltenen Schwersiedern zu trennen und in hoher Reinheit wieder zu gewinnen. Unter Schwersieder versteht man in diesem Zusammenhang alle verdampfbaren Produkte in der Extraktiv-Destillationskolonne, die nicht als gewünschter Leichtsieder über Kopf der Kolonne abgezogen werden. Beim System Tetrahydrofuran (THF) / Wasser wäre z.B. das THF der Leichtsieder und das Wasser der Schwersieder. Insbesondere bei einem relativ hohen Anteil von Schwersieder im Sumpfstrom aus der Kolonne kann sich eine weitere Auftrennung als äußerst schwierig erweisen. Es stellte sich somit die Aufgabe, ein verbessertes Verfahren zur Auftrennung azeotroper oder engsiedender Gemische durch eine Extraktiv-Rektifikation zu finden, welches den genannten Nachteilen abhilft und das eine verfahrenstechnisch einfache und wirtschaftliche Auftrennung ermöglicht.

Demgemäß wurde ein Verfahren zur Auftrennung azeotroper oder engsiedender Gemische durch eine Extraktiv-Rektifikation gefunden, bei welcher die ionische Flüssigkeit als Entrainer eingesetzt wird, welches dadurch gekennzeichnet ist, dass man schwersiedendes Sumpfprodukt durch einen Seitenstrom gasförmig aus der Kolonne abzieht.

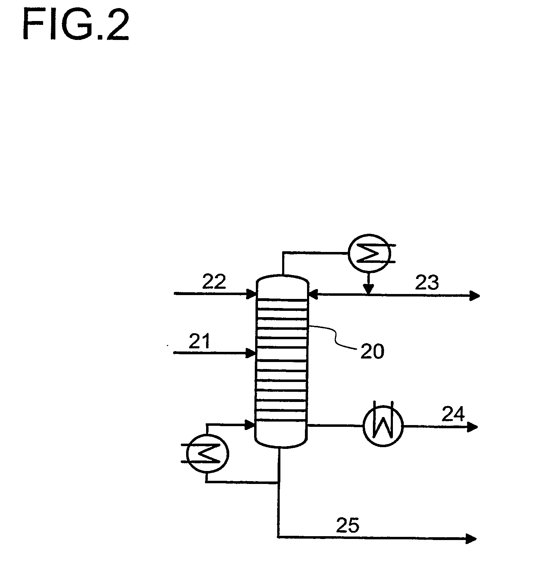

Das erfindungsgemäße Verfahren ist exemplarisch in Figur 2 dargestellt.

Der Gegenstrom-Rektifikationskolonne (20) wird über Leitung (21) der Feed und Leitung (22) die ionische Flüssigkeit als Entrainer zugeführt. Über Leitung (23) wird der Kopfstrom abgeführt.

Im Abtriebsteil der Extraktiv-Rektifikationskolonne wird der oder die Leichtsieder (LS) von dem oder den Schwersiedern (SS) und der ionischer Flüssigkeit (IF) abgetrennt, so dass im Sumpf kein Leichtsieder mehr vorhanden ist. Dieses ist durch eine ausreichende Trennstufenzahl im Abtriebsteil für den Fachmann der Destillation erreichbar, wenn die IF eine Selektivität von größer 1,3 bewirkt, was Ihre Aufgabe ist. Da die IF keinen Dampfdruck besitzt, besteht die Dampfphase im Sumpf vollständig aus Schwersieder. Dieser wird durch einen dampfförmiger Seitenstrom (24) abgezogen. Die Auslegung dieses Seitenstroms und der notwendigen Apparate erfolgt nach den üblichen Regeln der Destillation und sind von der jeweilig konkret vorliegenden Trennaufgabe abhängig. Da der Trennfaktor zwischen IF und SS unendlich groß ist, reicht eine Verdampfungsstufe zur Abtrennung aus. Für den Fall, dass andere schwersiedende Verunreinigungen vorhanden sind, bzw. im Sumpf entstehen oder ein Gemisch aus IF und herkömmlichen Lösungsmittel als Entrainer verwendet wurde, sind weitere Trennelemente notwendig.

Das schwersiedende Produkt wird mit dem Seitenstrom bevorzugt im Abtriebsteil nahe am Sumpf, besonders bevorzugt von einer der 3 untersten Stufen, ganz besonders bevorzugt direkt von der untersten Stufe aus dem Sumpf abgezogen.

Die optimale Menge des Seitenstroms hängt von der zulässigen Temperatur im Sumpf der Extraktiv-Rektifikation ab. Je größer der Strom, desto mehr SS wird aus dem Abtriebsteil der Kolonne entfernt und weniger SS ist im IF und damit im Sumpf enthalten. Folglich steigt die Temperatur im Sumpf, denn die IF hat keinen Dampfdruck. Hier sind die thermische Stabilität der Komponenten im Sumpf und die Belastbarkeit des Materials zu berücksichtigen. Ziel ist ein möglichst niedriger SS-Gehalt in der IF ohne thermische Schäden hervorzurufen. Je nach Stoffgemisch und Betriebsdruck kann die zulässige Sumpftemperatur von 50°C bis über 200°C betragen. Bevorzugt liegt sie zwischen. 100 und 200°C. Wegen der thermischen Stabilität gängiger ionischer Flüssigkeiten sollten 250°C, bevorzugt 200°C nicht überschritten werden.

Über den Seitenstrom kann der Gehalt an SS im IF stark erniedrigt werden. Erreichbar sind Gehalte an SS in IF von kleiner 10 %, bevorzugt kleiner 5 %, besonders bevorzugt kleiner 1 %, wobei die erreichbaren Werte von Druck und zulässiger Temperatur im Kolonnensumpf abhängen. Vorteilhaft für die Abreicherung des SS aus der IF sind neben der hohen Temperatur ein hoher Dampfdruck des SS und ein niedriger Kolonnendruck. Die angegebenen Konzentrationen sind, wenn nicht anders gekennzeichnet, auf die Masse bezogen, d.h. % bedeuten Gewichts-% und ppm bedeuten Gewichts-ppm.

Soll der SS als flüssiges Produkt anfallen, so ist der dampfförmige Seitenstrom mit Hilfe eines zusätzlichen Kondensators zu verflüssigen.

Mittels Leitung (25) wird der Sumpfstrom aus der Kolonne (20) abgeführt. In nachgeschalteten Verfahrensschritten wie Verdampfung und / oder Strippung kann weiterer Schwersieder, welcher in diesem Gemisch noch enthalten ist, abgetrennt werden.

Das erfindungsgemäße Verfahren ermöglicht die Abreicherung des Schwersieders im von der Kolonne anfallenden Sumpfstrom. Diese Abreinigung kann in einigen Anwendungsfällen in ihrer Qualität schon genügen, dass der noch anfallende Sumpfstrom direkt nahe dem Kolonnenkopf zurückgeführt wird, um somit die ionische Flüssigkeit erneut als Entrainer zu verwenden.

Aus wirtschaftlichen Gründen muss die IF im Kreislauf gefahren werden, d.h. SS, der in der IF verblieben ist, wird mit ihr wieder zum Kopf der Extraktiv-Rektifikation geführt. Dort wird ein Teil des SS in die Dampfphase gelangen und das Kopfprodukt (LS) verunreinigen. Wenn die Reinheitsanforderungen für den LS moderat sind, dann reicht die Abreicherung des SS im IF alleine durch den dampfförmigen Seitenstrom aus, und es ist keine weitere Aufarbeitung der IF nötig. In dieser besonders vorteilhaften Variante kann ein azeotrop- oder engsiedendes Gemisch durch Zugabe einer IF in einer Kolonne ohne Zusatzapparat in Leich- und Schwersieder aufgetrennt werden. Gegenüber einer normalen Extraktiv-Rektifikation, die immer eine zweite Kolonne zur Aufarbeitung des Entrainers benötigt, bedeutet das eine beachtliche Vereinfachung des Verfahrens sowie erhebliche Einsparung an Investitionskosten.

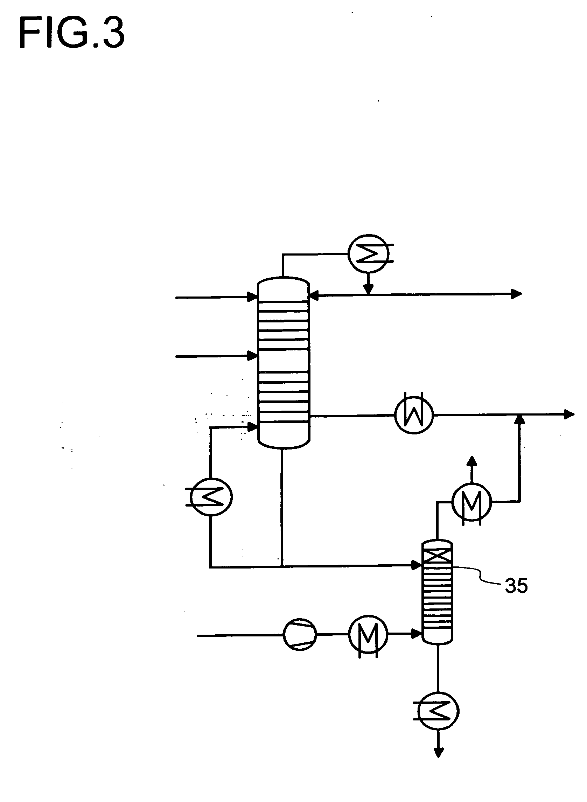

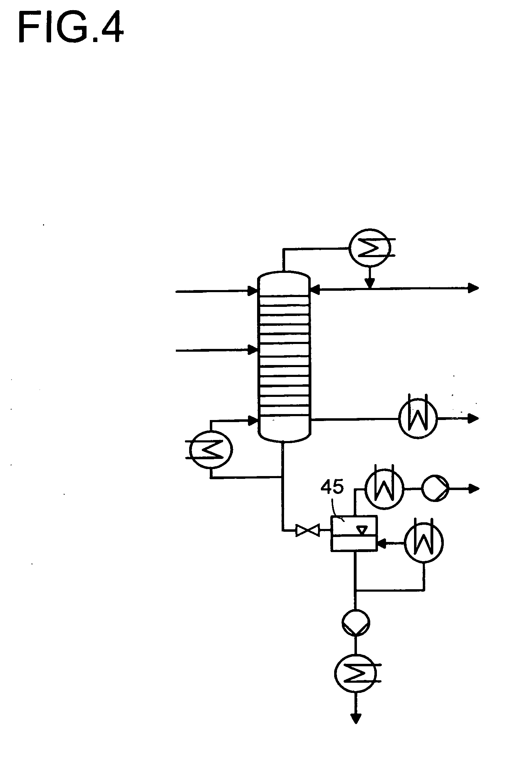

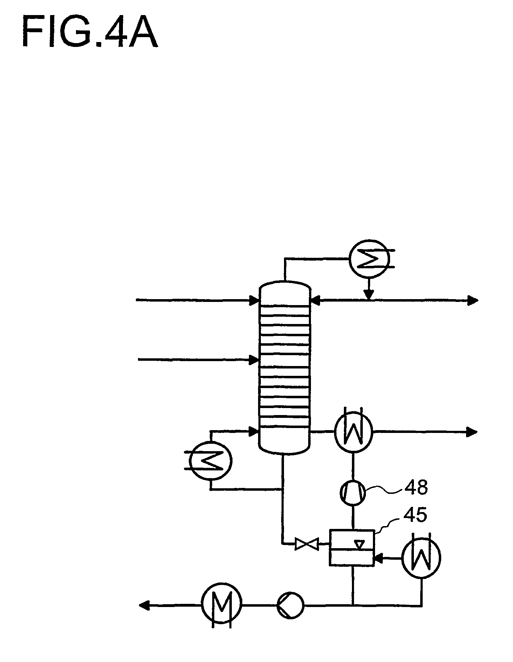

Im Falle erhöhter Anforderungen oder einer noch nicht befriedigenden Abreicherung von Schwersieder im Sumpfstrom kann sich vor einer Rückführung dieses Stroms in die Kolonne eine weitere Aufarbeitung empfehlen, um einer unerwünschten Verunreinigung des Kopfproduktes zu begegnen. Hierzu wird dieser entnommene Sumpfstrom einem Verdampfer und / oder einer Strippkolonne zugeführt, in welcher noch enthaltene Reste an Schwersieder weiter verringert werden. Im Anschluss wird die so gewonnene ionische Flüssigkeit der Kolonne wieder zugeführt. Diese Varianten sind exemplarisch in den Figuren 3 und 4 dargestellt. Sie entsprechen in ihrem wesentlichen Aufbau der Figur 2, es ist hier jedoch zusätzlich eine Aufarbeitung des Sumpfstromes dargestellt. Diese erfolgt gemäß Figur 3 mit einem Stripper (35) bzw. gemäß Figur 4 und 4a mit einem Verdampfer (45). In Figur 4a wird der Gasstrom aus dem Verdampfer (45) einem Verdichter (48) zugeführt.

Das erfindungsgemäße Verfahren bietet eine verfahrenstechnisch einfache und wirtschaftliche Möglichkeit der Auftrennung azeotroper oder engsiedender Gemische. Mit geringem apparativem Aufwand kann hierbei ein großer Teil des enthaltenen Schwersieders in hoher Reinheit gewonnen werden. Je nach konkreten, stoffspezifischen Rahmenbedingungen und Anforderungen kann die so im Sumpfstrom anfallende ionische Flüssigkeit direkt in die Kolonne zurückgeführt werden. Bei erhöhten Anforderungen ist zuvor eine weitere Auftrennung mittels einer Aufarbeitungsstufe erforderlich, der hierzu notwendige, verfahrenstechnische Aufwand ist jedoch aufgrund der erfindungsgemäßen Abtrennung des Schwersieders deutlich geringer.

### Beispiele

In den folgenden Beispielen sind alle Konzentrationen, wenn nicht anders gekennzeichnet, auf die Masse bezogen, d.h. % bedeutet Gewichts-% und ppm bedeutet Gewichts-ppm.

In allen Beispielen betrug der Zulauf in die Extraktiv-Rektifikationskolonne 844 kg/h eines binären Gemisches bestehend aus 77 % TMB(Trimethylborat) und 23 % Methanol. Dieses ist die azeotrope Zusammensetzung. Die Kolonne hatte immer 20 Stufen und wurde bei einem Rücklaufverhältnis von RV = 0,5 und einem Druck von P = 1 bar gefahren. Der Feedboden lag immer auf Stufe 12.

### Beispiel 1: Extraktiv-Rektifikation mit Seitenstrom

### (Vergleiche Figur 2)

Am Kopf der Kolonne wurde die IF (1-Ethyl-3-Methyl-Imidazolium-Tosylat) mit 1364 kg/h aufgegeben. Sie enthielt 1 % Methanol. Als Kopfprodukt fielen 657 kg/h mit einer Konzentration von 99 % TMB und 1 % Methanol an. Aus dem Sumpf der Kolonne wurden 179 kg/h reines Methanol über einen Seitenstrom dampfförmig entnommen.

Kopf- und Sumpftemperatur stellten sich bei 63 und 180°C ein. Als Sumpfprodukt ergab sich ein Strom von 1364 kg/h mit 99 % IF und 1 % Methanol.

Von den Wärmeübertragern wurden folgende Energiemengen verbraucht: Kolonnenkondensator: 95 kW, Kolonnenverdampfer: 303 kW, Seitenstromkondensator: 63 kW.

Ergebnis: Das Azeotrop wird durch die Ionische Flüssigkeit gebrochen. 99 % Reinheit im Kopfprodukt werden erreicht. Ist diese Produktreinheit ausreichend, so ist keine weitere Aufbereitung der am Sumpf austretenden IF nötig. Sie kann direkt zum Kopf der Kolonne zurückgeführt werden. So kann mit IF als Entrainer und einer Kolonne mit Seitenstrom das Azeotrop überwunden werden und Produkt von relativ hoher Reinheit erzeugt werden.

### Beispiel 2: Extraktiv-Rektifikation ohne Seitenstrom

Am Kopf der Kolonne wurde die IF (1-Ethyl-3-Methyl-Imidazolium-Tosylat) mit 1452 kg/h aufgegeben. Sie enthielt 1 % Methanol. Als Kopfprodukt fielen 657 kg/h mit einer Konzentration von 99 % TMB und 1 % Methanol an. Es wurde kein Seitenstrom entnommen. Kopf- und Sumpftemperatur stellten sich bei 63 und 94°C ein. Als Sumpfprodukt ergab sich ein Strom von 1639 kg/h mit 87,6 % IF und 12,4 % Methanol. Von den Wärmeübertragern wurden folgende Energiemengen verbraucht: Kolonnenkondensator: 95 kW, Kolonnenverdampfer: 136 kW.

Ergebnis: Der im Sumpf der Kolonne anfallende IF-reiche Strom hat mit über 12 % eine zu hohe Konzentration an Methanol. Diese IF kann nicht direkt im Kreislauf gefahren und wieder auf die Kolonne gegeben werden, da Reinheiten von 99 % im Destillat dann nicht erreichbar ist.

## Patentansprüche

1. Verfahren zur Auftrennung azeotroper oder engsiedender Gemische durch eine Extraktiv-Rektifikation, bei welcher ionische Flüssigkeit als Entrainer eingesetzt wird, **dadurch gekennzeichnet, dass** man schwersiedendes Sumpfprodukt durch einen Seitenstrom dampfförmig aus der Kolonne abzieht.

2. Verfahren gemäß Anspruch 1, **dadurch gekennzeichnet, dass** man den Seitenstrom im Abtriebsteil der Kolonne im Bereich der untersten drei Stufen, bevorzugt direkt an der untersten Stufe positioniert.

3. Verfahren gemäß Ansprüchen 1 bis 2, **dadurch gekennzeichnet, dass** man den Sumpfstrom der Kolonne einer Aufarbeitungsstufe zuführt, in welcher die enthaltene ionische Flüssigkeit durch Verdampfung von noch vorhandenem Schwersieder weiter abgetrennt wird.

4. Verfahren gemäß Ansprüchen 1 bis 3, **dadurch gekennzeichnet, dass** man den Sumpfstrom der Kolonne einer Aufarbeitungsstufe zuführt, in welcher die enthaltene ionische Flüssigkeit durch Strippung von noch vorhandenem Schwersieder weiter abgetrennt wird.

5. Verfahren gemäß Ansprüchen 1 bis 2, **dadurch gekennzeichnet, dass** man den an Schwersieder abgereicherten Sumpfstrom in die Kolonne bevorzugt im Verstärkungsteil, besonders bevorzugt auf eine der obersten 3 Stufen, ganz besonders bevorzugt auf die oberste Stufe zurückführt.

6. Verfahren gemäß Ansprüchen 3 bis 4, **dadurch gekennzeichnet, dass** man die aus der Aufarbeitungsstufe gewonnene ionische Flüssigkeit in die Kolonne bevorzugt im Verstärkungsteil, besonders bevorzugt auf eine der obersten 3 Stufen, ganz besonders bevorzugt auf die oberste Stufe zurückführt.

## Claims

1. A process for separating azeotropic or close-boiling mixtures by means of an extractive rectification in which an ionic liquid is used as entrainer, wherein a high-boiling bottom product is taken off from the column, in vapor form via a side offtake.

2. The process according to claim 1, wherein the side offtake is positioned in the stripping section of the column in the region of the bottommost three plates, preferably directly at the bottommost plate.

3. The process according to claim 1 or 2, wherein the bottom stream from the column is passed to a work-up stage in which the ionic liquid present is separated off from high boilers still present by vaporization.

4. The process according to any of claims 1 to 3, wherein the bottom stream from the column is passed to a work-up stage in which the ionic liquid present is separated off from high boilers still present by stripping.

5. The process according to claim 1 or 2, wherein the bottom stream which has been depleted in high boilers is recirculated to the column, preferably in the enrichment section, particularly preferably onto one of the uppermost 3 plates, very particularly preferably onto the uppermost plate.

6. The process according to claim 3 or 4, wherein the ionic liquid recovered from the work-up stage is recirculated to the column, preferably in the enrichment section, particularly preferably onto one of the uppermost 3 plates, very particularly preferably onto the uppermost plate.

## Revendications

1. Procédé de fractionnement, par rectification extractive, de mélanges azéotropiques ou de mélanges dont la gamme de points d'ébullition est restreinte, lors duquel on met en oeuvre un liquide ionique comme agent d'entraînement, **caractérisé en ce que** l'on enlève le produit de fond à point d'ébullition élevé de la colonne en l'extrayant sous forme de vapeur par un flux latéral.

2. Procédé selon la revendication 1, **caractérisé en ce que** le flux latéral est positionné dans la partie à flux descendant de ladite colonne, au niveau des trois étages inférieurs, de préférence directement au niveau de l'étage situé au plus bas.

3. Procédé selon les revendications 1 à 2, **caractérisé en ce que** l'on introduit le flux de fond de la colonne dans un étage de retraitement dans lequel le liquide ionique y étant contenu est séparé encore une fois, par évaporation, du produit à point d'ébullition élevé restant.

4. Procédé selon les revendications 1 à 3, **caractérisé en ce que** l'on introduit le flux de fond de la colonne dans un étage de retraitement dans lequel le liquide ionique y étant contenu est séparé encore une fois, par stripping, du produit à point d'ébullition élevé restant.

5. Procédé selon les revendications 1 à 2, **caractérisé en ce que** la réintroduction dans la colonne du flux de fond enrichi en produit à point d'ébullition élevé est réalisé préférentiellement dans la partie de renforcement, notamment à l'un des 3 étages situés le plus en haut et, avec une préférence particulière, à l'étage situé au plus haut.

6. Procédé selon les revendications 3 à 4, **caractérisé en ce que** l'on réintroduit le liquide ionique récupéré de l'étage de retraitement dans la colonne, ladite réintroduction étant réalisé préférentiellement dans la partie de renforcement, notamment à l'un des 3 étages situés le plus en haut et, avec une préférence particulière, à l'étage situé au plus haut.
